**Europäisches Patentamt**

**European Patent Office**

**Office européen des brevets**

(19)

(11) Veröffentlichungsnummer : **0 498 763 A1**

(12) # EUROPÄISCHE PATENTANMELDUNG

(21) Anmeldenummer : **92810050.2**

(22) Anmeldetag : **24.01.92**

(51) Int. Cl.⁵ : **B24B 49/00,** G05B 19/405, G05B 19/18

(30) Priorität : **08.02.91 CH 405/91**

(43) Veröffentlichungstag der Anmeldung :
**12.08.92 Patentblatt 92/33**

(84) Benannte Vertragsstaaten :
**AT CH DE ES FR GB IT LI SE**

(71) Anmelder : **Agathon A.G. Maschinenfabrik
Obere Steingrubenstrasse 48
CH-4500 Solothurn (CH)**

(72) Erfinder : **Pfluger, Walter, Dr.
Stöcklimattstrasse 38
CH-4513 Langendorf (CH)**

(74) Vertreter : **Fischer, Franz Josef
c/o Bovard AG Optingenstrasse 16
CH-3000 Bern 25 (CH)**

(54) **Steuervorrichtung an einer spitzenlosen Rundschleifmaschine.**

(57)    Mit der erfindungsgemässen Steuervorrichtung an einer spitzenlosen Rundschleifmaschine ist man dazu übergegangen, beim Programmieren anstelle von bisher üblichen maschinenbezogenen Achsbewegungen auf das Werkstück bezogene Daten in die Steuervorrichtung einzugeben. Die werkstückbezogenen Daten werden dabei durch weitere Eingaben, beispielsweise durch Angaben bezüglich der gewünschten Bearbeitungslage des Werkstückes und durch Bearbeitungsvorgaben, wie das spezifische Zerspanungsvolumen, ergänzt. Dadurch wird erreicht, dass es für den Benutzer oder Bediener der Rundschleifmaschine nicht mehr erforderlich ist, Umrechnungen von Achszustellbewegungen der Maschine auf Durchmesserveränderungen des Werkstückes umzurechnen und umgekehrt, oder solche wechselseitigen Beziehungen aus Tabellen oder Schleifversuchen zu ermitteln.

EP 0 498 763 A1

Die vorliegende Erfindung bezieht sich auf eine Steuervorrichtung an einer spitzenlosen Rundschleifmaschine gemäss dem Oberbegriff des Patentanspruches 1 sowie auf ein Verfahren zum Durchführen eines Schleifvorganges gemäss dem Oberbegriff des Patentanspruches 12.

Spitzenlose Rundschleifmaschinen, die mit einer CNC-Steuervorrichtung ausgerüstet sind, sind auf dem Markt bekannt. Das Einrichten solcher Maschinen ist aufwendig und kompliziert. Verschiedenartige Einrichtoperationen müssen, bevor mit dem eigentlichen Schleifen eines Bearbeitungsloses begonnen werden kann, ausgeführt werden. Wesentlich ist, und das erschwert das Einrichten zusätzlich, dass zum Durchführen solcher Einrichtoperationen immer das Know-How einer Bedienungsperson beansprucht wird. Das Vorhandensein oder Nichtvorhandensein von Erfahrungswerten kann für die zum Einrichten benötigte Zeit massgebend sein. Zum Einrichten einer zum Stand der Technik gehörenden Maschine wird im wesentlichen wie folgt vorgegangen:

Die Nullstellung des Regelscheibenschlittens wird definiert, Abrichtschlitten werden in die Ausgangspositionen gebracht, geeignete Schleif- und Regelscheiben werden montiert, zylindrische Abrichtschablonen werden parallel zur Regelscheibenachse bzw. parallel zur Schleifscheibenachse ausgerichtet.

Beim Durchlaufschleifen wird die Durchlaufgeschwindigkeit eines Werkstückes durch den Neigungswinkel, die Drehzahl und den Durchmesser der Regelscheibe bestimmt. Das richtige Einstellen des Neigungswinkels beruht weitgehend auf den Erfahrungen der Bedienungsperson.

Zum Erzielen einer definierten Mantelfläche der geneigten Regelscheibe und der Schleifscheibe werden diese abgerichtet. Die Schleifscheibe auf Zentrumshöhe und die Regelscheibe auf einer von der Bedienungsperson aus Erfahrung bestimmten, von der Zentrumshöhe abweichenden Höhe auf der die später vorgesehene Berührungslinie Regelscheibe/Werkstück zu liegen kommt.

Die Wahl der Werkstückauflage, die parallel zur Schleifscheibe ausgerichtet wird, richtet sich unter anderem nach dem Durchmesser des Werkstückes. Dieses liegt während dem Bearbeiten an drei Stellen, nämlich an der Werkstückauflage, an der Regelscheibe und an der Schleifscheibe auf. Die erzielbare Rundheit des Werkstückes wird wesentlich von der Lage der obgenannten Berührungsstellen beeinflusst. Sie kann durch ein nachträgliches Verschieben und Anpassen der Auflagenhöhe bzw. des Auflagenwinkels optimiert werden. Eventuell muss dazu die Regelscheibe erneut abgerichtet werden. Dies kann auch dann der Fall sein, wenn die Regelscheibe nicht richtig zur Werkstückauflage ausgerichtet ist und nachjustiert werden muss.

Bei Schleifversuchen werden die Regelscheibe und die Schleifscheibe im Handbetrieb nahe an das auf der Werkstückauflage liegende, zu bearbeitende Werkstück zugestellt. Die Regelscheibe und die Schleifscheibe werden eingeschaltet und letztere durch schrittweises Betätigen einer Zustelltaste weiter gegen das Werkstück verschoben, bis dieses, beispielsweise beim Durchlaufschleifen, zwischen den Scheiben hindurchgezogen wird. Das Werkstück wird ausgemessen und die Regel- bzw. die Schleifscheibe werden nach wiederholten Schleifvorgängen und Messungen weiter an das Werkstück zugestellt, bis das letztere das Fertigmass erreicht hat.

Dieses komplizierte, auf die Maschinenachsen bezogene Zustellen der genannten Scheiben ist notwendig, weil die Summe aller Zustellbewegungen nicht gleich der Durchmesserverminderung des Werkstückes ist, da dieses abweichend von den Zentrumshöhen der genannten Scheiben geschliffen wird.

Erst nach dem Durchführen dieser Einrichtoperationen kann nun mit der eigentlichen Serienbearbeitung begonnen werden. Der Steuervorrichtung ist bei diesen Tätigkeiten, die von der Bedienungsperson ausgeführt worden sind, mitgeteilt worden, wie die einzelnen Maschinenachsen in den folgenden Schleifvorgängen zu steuern sind. Dies, nachdem vorgängig verschiedene, aus der Erfahrung bekannte Annahmen und Einstellungen, wie beispielsweise Auswahl der Schleif- und der Regelscheibe, Vorschubsneigung der Regelscheibe, Abrichthöhe sowie Auswahl und Höheneinstellung der Werkstückauflage, getroffen worden sind.

Nach jedem Abrichten ist zumindest ein Teil der vorgenannten Vorgänge zu wiederholen. Es ist dabei zu berücksichtigen, dass durch jedes Abrichten der Durchmesser der Schleifscheibe und/oder der Regelscheibe kleiner wird. Dadurch sowie durch die Abnahme des Werkstückdurchmessers werden auch die Lagen der Berührungslinien des Werkstückes mit den genannten Scheiben verändert.

Um die optimale Rundheit der Werkstücke aufrechtzuerhalten, sollten alle sich im Laufe des Schleifverfahrens ändernden Werte dauernd angepasst werden. Nur so wäre es möglich, auch bei hohen Zerspanungsleistungen optimale Toleranzwerte zu gewährleisten.

Wichtig sei nochmals die Feststellung, dass bei zum Stand der Technik gehörenden Maschinen das Einrichten derselben auf die Maschinenachsen bezogen erfolgt. Dies bedeutet mit anderen Worten, dass beim Einrichten, insbesondere anlässlich der Schleifversuche, der Steuervorrichtung mitteilt, wie die verschiedenen Maschinenachsen (Wege, Richtung und Zustellgeschwindigkeit) beim Bearbeiten eines Werkstückes zusteuern sind. Es ist ohne weiteres einzusehen, dass ein optimales Bearbeiten eines Werkstückes in Bezug auf Bearbeitungszeit und geforderter Genauigkeit in einem grossen Masse vom Wissen und von den Erfahrungen der Bedienungsperson beim Einrichten (Einstellen und Programmieren) der Maschine abhängig ist.

Es ist die Aufgabe der vorliegenden Erfindung, das Einrichten bei einer spitzenlosen Rundschleifmaschine gegenüber dem bekannten Stand der Technik wesentlich zu vereinfachen.

Diese Aufgabe wird mit einer Steuervorrichtung, die die im kennzeichnenden Teil des Patentanspruches 1 aufgeführten Merkmale aufweist, sowie mit einem Verfahren, das durch die im Patentanspruch 12 aufgeführten Verfahrensschritte gekennzeichnet ist, gelöst.

Mit der erfindungsgemässen Steuervorrichtung ist man, abweichend vom üblichen Stand der Technik, dazu übergegangen, beim Programmieren einer spitzenlosen Rundschleifmaschine anstelle von maschinenbezogenen Achsbewegungen auf das Werkstück bezogene Daten in die Steuervorrichtung einzugeben. Die werkstückbezogenen Daten werden dabei durch weitere Eingaben, beispielsweise durch Angaben bezüglich der gewünschten Bearbeitungslage des Werkstückes, und durch Bearbeitungsvorgaben, wie z.B. das spezifische Zerspanungsvolumen, ergänzt. Dadurch wird erreicht, dass es für den Benutzer oder Bediener der Rundschleifmaschine nicht mehr erforderlich ist, Umrechnungen von Achszustellbewegungen der Maschine auf Durchmesserveränderungen des Werkstückes umzurechnen und umgekehrt, oder solche wechselseitigen Beziehungen aus Tabellen oder aus Schleifversuchen zu ermitteln. Anhand von werkstückbezogenen Daten werden Einstellungen der Maschine automatisch vorgenommen. Indem der Steuervorrichtung eine geeignete Dateneingabeeinrichtung sowie eine geeignete Anzeigeeinheit zugeordnet wird, wird erreicht, dass die Denkweise des Bedieners der spitzenlosen Rundschleifmaschine nicht mehr maschinenbezogen, sondern werkstückbezogen ist. Zum Einrichten der Maschine sind keine Vorausberechnungen, beispielsweise mit Tabellen, mehr notwendig. Die Schleifspaltgeometrie ist in der Steuervorrichtung integriert.

Die Benutzeroberfläche der Steuervorrichtung ist im Verbund mit der genannten Dateneingabeeinrichtung und der Anzeigeeinheit so konzipiert worden, dass an der letzteren werkstückbezogene Anzeigen darstellbar sind und notwendige Korrekturen auf einfachste Weise über die Dateneingabeeinrichtung auf das Werkstück bezogen eingegeben werden können. Die Auswirkung der Korrektur ist somit sofort am dargestellten Werkstück ersichtlich. Wenn andererseits die Bearbeitungslage des Werkstückes im Schleifspalt gewechselt wird, wird die neue Schleifspaltgeometrie von der Steuervorrichtung automatisch bestimmt und kann auf der Anzeigeeinheit dargestellt werden. Es ist ebenfalls vorgesehen, dass in der Steuervorrichtung Grenzbestimmungen enthalten sind, auf deren Einhaltung die eingegebenen werkstückbezogenen Daten, die Angaben bezüglich der geometrischen Lage des Werkstückes im Schleifspalt und die Bearbeitungsvorgaben überprüft werden. Beispielsweise wird kontrolliert, dass ein gegenseitiges Berühren der Regelscheibe, der Werkstückauflage und der Schleifscheibe ausgeschlossen ist. Unzulässige Ueberschreitungen und/oder Abweichungen werden entweder selbsttätig korrigiert oder zur manuellen Korrektur auf der Anzeigeeinheit angezeigt.

Besonders vorteilhaft wirkt sich die erfindungsgemässe Steuervorrichtung zusammen mit der weiter hinten beschriebenen Ausführung einer spitzenlosen Rundschleifmaschine aus. Bei dieser letzteren sind sowohl die Regelscheibe als auch die Schleifscheibe auf je einem X-Y-Schlitten angeordnet. Jeder der genannten Scheiben ist eine bezüglich der X- und Y-Achsen der genannten Schlitten feste Abrichtvorrichtung zugeordnet. Die Schleifscheibe und die Regelscheibe werden, über die entsprechenden X-Y-Achsen der Maschine gesteuert, der Abrichtvorrichtung zugeführt. Ein automatisches Abrichten der Regelscheibe und der Schleifscheibe, bezogen auf die werkstückabhängig eingegebenen Daten sowie der Lage des Werkstückes während der Bearbeitung wird mit der erfindungsgemässen Steuervorrichtung erstmals ermöglicht.

Während dem Bearbeiten eines Werkstückes werden aus den einzelnen Achsstellungen der Rundschleifmaschine durch die Steuervorrichtung die momentanen Werkstückdaten, die momentane Lage des Werkstückes im Schleifspalt und die Bearbeitungsgrössen ermittelt, mit Sollwerten und Grenzbestimmungen verglichen und, wenn erforderlich, dem während des Bearbeitungsvorganges kleiner werdenden Werkstückdurchmesser angepasst und/oder nachgeführt.

Nachstehend wird die Erfindung anhand von lediglich ein Ausführungsbeispiel darstellenden Zeichnungen näher erläutert. Es zeigen

**Fig. 1** den prinzipiellen Aufbau und eine bevorzugte Anordnung der erfindungsgemässen Steuervorrichtung an einer bevorzugten Ausführungsform einer spitzenlosen Rundschleifmaschine,

**Fig. 2** die einzelnen wesentlichen Teile der Steuervorrichtung und deren Zusammenwirken untereinander und mit der spitzenlosen Rundschleifmaschine,

**Fig. 3** eine Darstellung der Geometrie des Schleifspaltes der spitzenlosen Rundschleifmaschine gemäss den Fig. 1 und 2, und

**Fig. 4, 5 und 6** Darstellungen der Benutzeroberfläche der erfindungsgemässen Steuervorrichtung zum Beschreiben eines Schleifvorganges an einem Werkstück.

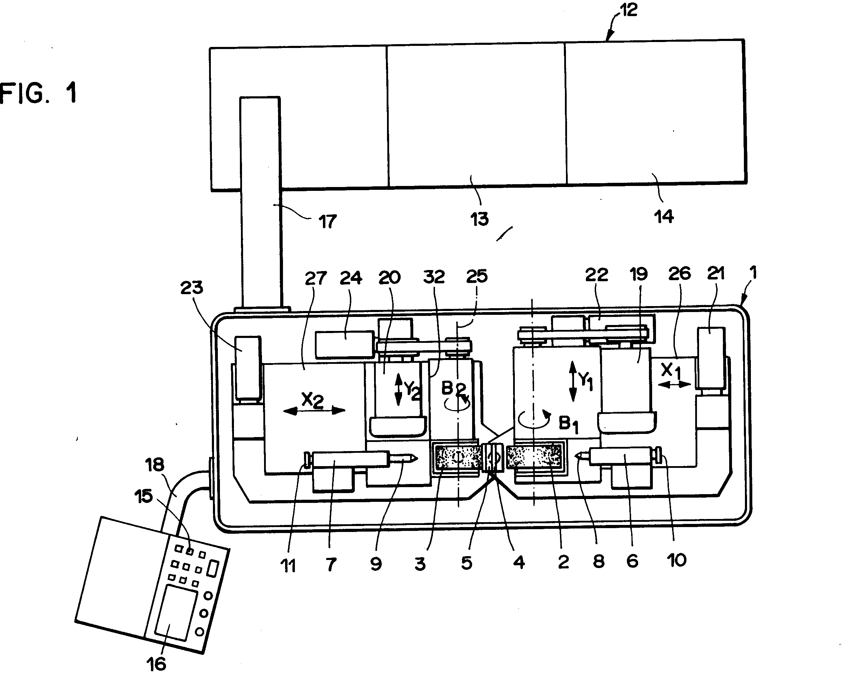

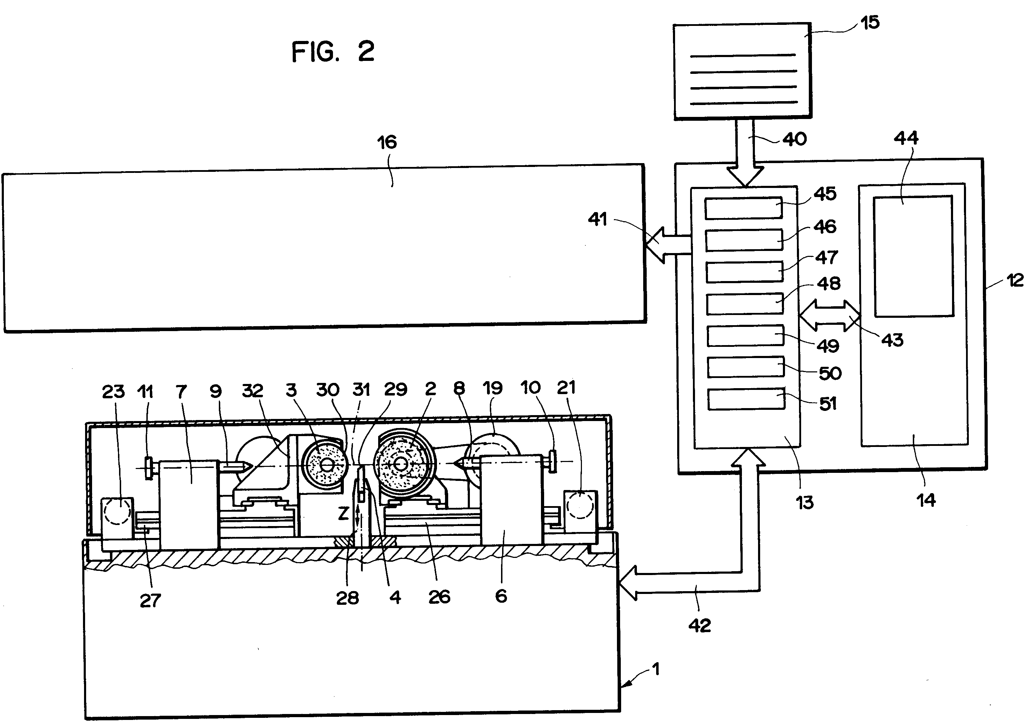

Anhand der Fig. 1 und 2 soll vorerst einmal der hardwaremässige Aufbau der erfindungsgemässen Steuervorrichtung 12, 15, 16 im Verbund mit einer bevorzugten Ausführungsform einer spitzenlosen Rundschleifmaschine 1 beschrieben werden. Die letztere umfasst im wesentlichen eine Schleifscheibe 2, die um eine Drehachse B1 rotierend, von einem ersten Motor 19 angetrieben ist. Die Schleifscheibe 2 und der erste Motor 19 sind auf einem ersten X-Y-Schlitten 26 angeordnet, der einen nicht näher bezeichneten, in einer Richtung X1 verschiebbaren ersten X-Schlitten und in einer Richtung Y1 verschiebbaren ersten Y-Schlitten umfasst. Je ein numerisch gesteuerter Antrieb 21 und 22 ist zum Verschieben der genannten Schlitten in den rechtwinklig zueinanderstehenden Richtungen X1, Y1 vorgesehen. Eine erste Abrichtvorrichtung 6 für die Schleifscheibe 2 ist bezüglich der Bewegungen des ersten X-Y-Schlittens ortsfest angeordnet. Eine erste Abrichtspitze 8 kann innerhalb der ersten Abrichtvorrichtung 6 mittels eines ersten Einstellorganges 10 in radialer Richtung der Schleifscheibe 2 bzw. in der Richtung X1 verschoben werden.

In radialer Richtung der Schleifscheibe 2 gegenüberliegend ist eine Regelscheibe 3 auf einem zweiten X-Y-Schlitten 27 angeordnet. Die Regelscheibe 3 ist über einen zweiten Motor 20 um eine Achse B2 rotierend antreibbar. Der zweite X-Y-Schlitten umfasst einen nicht näher bezeichneten zweiten X-Schlitten und einen nicht näher bezeichneten zweiten Y-Schlitten, welche rechtwinklig zueinander in einer X2-Richtung bzw. in einer Y2-Richtung verschiebbar sind. Die Verschiebebewegungen werden durch numerisch gesteuerte Antriebe 23 und 24 für je einen der genannten Schlitten vorgenommen. Eine zweite Abrichtvorrichtung 7 für die Regelscheibe 3 ist bezüglich der Bewegungen des zweiten X-Y-Schlittens 27 ortsfest angeordnet. Die zweite Abrichtvorrichtung 7 umfasst eine zweite Abrichtspitze 9, die mit einem zweiten Einstellorgan 11 in radialer Richtung der Regelscheibe 3, bzw. in der Richtung X2 verschiebbar ist.

Zwischen den einander gegenüberliegenden Schleifscheibe 2 und der Regelscheibe 3 ist ein Schleifspalt gebildet. In diesem ist ein Werkstückauflagelineal 4 zum Auflegen eines zu bearbeitenden Werkstückes 5 angeordnet. Der Werkstückauflagelineal 4 ist in einer Z-Richtung, welche rechtwinklig zu den genannten X- und Y-Richtungen verläuft, numerisch gesteuert oder manuell einstellbar. Dazu ist er in einer entsprechend ausgeführten Halterung 28 gehalten. Der Werkstückauflagelineal 4 weist auf seiner der Halterung 28 abgewandten Seite eine meistens gegenüber der durch die X- und Y-Achsen aufgespannten Fläche geneigten Werkstückauflagefläche 29 auf.

Die Steuervorrichtung 12, 15, 16 umfasst im wesentlichen eine Steuereinheit 12, der eine Dateneingabeeinrichtung 15 und eine Anzeigeeinheit 16 zugeordnet sind. Die Steuereinheit 12 und die Dateneingabeeinrichtung 15 sowie die Anzeigeeinheit 16 können, wie dies in der Fig. 1 angedeutet ist, räumlich voneinander getrennt sein. Die elektrischen Verbindungen der Steuereinheit 12, sowohl mit der spitzenlosen Rundschleifmaschine 1 als auch mit der Dateneingabeeinrichtung 15 sowie der Anzeigeeinheit 16 erfolgen über einen Kabelkanal 17, der die Steuereinheit 12 mit der spitzenlosen Rundschleifmaschine 1 verbindet, sowie über einen weiteren Kabelkanal 18, der zwischen der spitzenlosen Rundschleifmaschine 1 und der Dateneingabeeinrichtung resp. der Anzeigeeinheit angeordnet ist.

Die Steuereinheit 12 umfasst im wesentlichen Rechenmittel 13 und Speichermittel 14. In den Rechenmitteln 13 sind mehrere Module 45, 46, 47, 48, 49, 50, 51, die sowohl hardwaremässig als auch softwaremässig ausgeführt sein können, vorgesehen. Die Speichermittel 14 umfassen einen Bereich 44, in dem eine Technologiedatenbank enthalten ist.

Die Rechenmittel 13 sind über erste Verbindungsleitungen 40 zum Empfangen von Informationen mit der Dateneingabeeinrichtung 15, vorzugsweise einer Tastatur, verbunden. Zweite Verbindungsleitungen 41, die die Rechenmittel 13 mit der Anzeigeeinheit 16 verbinden, sind dazu vorgesehen, der Anzeigeeinheit die zum Anzeigen bestimmten Informationen zuzuführen. Dritte Verbindungsleitungen 42 stellen die notwendigen elektrischen Verbindungen zwischen den Rechenmitteln 13 und der spitzenlosen Rundschleifmaschine 1 her. Sie dienen einerseits zum Uebertragen von Steuersignalen an die verschiedenen numerisch gesteuerten Achsen der Maschine und andererseits zum Zurückführen von Messwerten oder Achsenstellungen von der Maschine an die Rechenmittel. Die letzteren sind mit den Speichermitteln 14 in bekannter Weise über einen Daten-, Adress- und Steuerbus 43 verbunden.

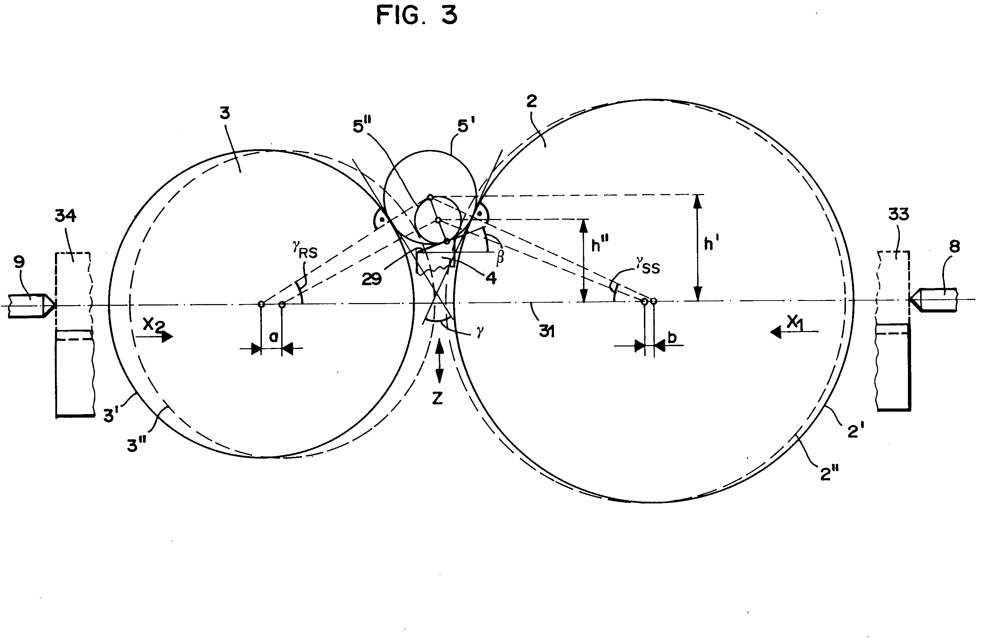

Aus der Fig. 3 ist die Geometrie des Schleifspaltes ersichtlich. Die Schleifscheibe 2 ist in einer Startposition 2′ und in einer Endposition 2″ dargestellt. Ebenfalls die Regelscheibe 3 ist in einer Startposition 3′ und in einer Endposition 3″ gezeichnet. Die Startpositionen entsprechen denjenigen Stellungen der genannten Scheiben vor dem Bearbeiten eines Werkstückes 5′ und die Endpositionen entsprechen den Stellungen der genannten Scheiben nach dem Bearbeiten des Werkstückes, welches mit reduziertem Durchmesser mit 5″ bezeichnet ist. Das Werkstück liegt einerseits vor, während und nach dem Bearbeiten auf der Werkstückauflagefläche 29 des Werkstückauflagelineales 4 auf. Andererseits steht das Werkstück vor, während und nach dem Bearbeiten sowohl mit der Regelscheibe 3 als auch mit der Schleifscheibe 2 in Verbindung. Die Zentrumshöhen der Regelscheibe 3 als auch der Schleifscheibe 2 sind mit dem Kennzeichen 31 gekennzeichnet. Das Zentrum des unbearbeiteten Werkstückes 5′ ist gegenüber der Zentrumshöhe 31 der genannten Scheiben um h′ erhöht. Das Zentrum des bearbeiteten Werkstückes 5″ ist gegenüber der genannten Zentrumshöhe 31 der beiden Scheiben noch um h″ erhöht. Im dargestellten Beispiel sei angenommen, dass beim Bearbeiten des Werkstückes der Durchmesser vom unbearbeiteten Werkstück 5′ zum bearbeiteten Werkstück 5″ auf die Hälfte reduziert werde. Unter der Bedingung, dass beispielsweise der Auflagepunkt des Werkstückes an der Werkstückauflagefläche

4

29 des Werkstückauflagelineales 4 beibehalten werden soll, muss die Regelscheibe 3 um die Distanz a in der Richtung X2 und die Schleifscheibe 2 um die Distanz b in der Richtung X1 zum Werkstück zugestellt werden.

Aus dieser Darstellung ist sehr schön ersichtlich, dass die Summe der Zustellwege (a + b) der genannten Scheiben 3, 2 insgesamt kleiner ist als die Durchmesserreduktion des Werkstückes. Daher rühren die eingangs genannten Schwierigkeiten beim Programmieren der achsbezogenen Zustellwege der Regelscheibe 3 als auch der Schleifscheibe 2 bei zum Stand der Technik gehörenden Steuervorrichtungen. Anhand von Tabellen, Erfahrungen, Berechnungen oder Schleifversuchen mussten bisher die genannten Zustellwege für eine gewünschte Durchmesserreduktion des Werkstückes zuerst eruiert werden. Eine Arbeit, die die erfindungsgemässe Steuervorrichtung selbständig ausführt, nachdem ihr werkstückbezogene Daten, wie beispielsweise der Werkstückdurchmesser vor der Bearbeitung und der Werkstückdurchmesser nach der Bearbeitung eingegeben, sowie Angaben bezüglich der geometrischen Lage des Werkstückes im Schleifspalt gemacht worden sind.

Aus der Fig. 3 ist ebenfalls ersichtlich, dass mit der vorgängig beschriebenen, bevorzugten Ausführungsform der spitzenlosen Rundschleifmaschine sowohl die Abrichtung der Schleifscheibe 2 mit der ersten Abrichtspitze 8 als auch die Abrichtung der Regelscheibe 3 mit der zweiten Abrichtspitze 9 je auf der Zentrumshöhe 31 der beiden Scheiben erfolgt. Da bekanntlich die Regelscheibe 3 zum Erzielen eines Werkstückvorschubes oder zum Andrücken eines zu bearbeitenden Werkstückes gegen einen stirnseitigen Anschlag des letzteren um eine Schwenkfläche 32 in vertikaler Richtung um höchstens einige Grad geneigt ist, ist beim Abrichten auf Zentrumshöhe zu berücksichtigen, dass die Mantelfläche 30 (Fig. 2) zum Erzielen einer Berührungslinie zwischen der geneigten Regelscheibe 3 und dem Werkstück 5 nicht zylinderförmig sondern hyperbelförmig ist. Während man früher mit einer an die Regelscheibe zuführbaren Abrichtvorrichtung die geneigte Regelscheibe auf der zum Bearbeiten des Werkstückes vorgesehenen Berührungslinie geradlinig abrichtete, kann bei der hier gezeigten, bevorzugten Ausführungsform der spitzenlosen Rundschleifmaschine die Regelscheibe 3 mit dem zweiten X-Y-Schlitten 27 an die ihr zugeordnete zweite Abrichtspitze 9 zugeführt und unter Berücksichtigung des Werkstückenddurchmessers abgerichtet werden. Die Berechnung der erforderlichen Kontur der Mantelfläche 30 der Regelscheibe 3 für ein bestimmtes Werkstück, das an einer bestimmten geometrischen Lage im Schleifspalt seinen Enddurchmesser erhalten soll, erfolgt dabei durch entsprechende Module 47, 48, 49 der Rechenmittel 13.

Indem die Abrichtspitzen 8 und 9 für die Schleifscheibe 2 bzw. die Regelscheibe 3 vorgängig zum Abrichten bezüglich fest zu einem Maschinennullpunkt angeordneten Anschlägen 34, 33 eingestellt worden sind und an den Abrichtvorrichtungen 6, 7 nicht dargestellte Tastorgane vorhanden sind, die ein Berühren der der jeweiligen Abrichtvorrichtung zugeordneten Scheibe mit der ersteren erkennen, ist es mit der erfindungsgemässen Steuervorrichtung ebenfalls möglich, die Scheibendurchmesser, insbesondere nach dem Abrichtvorgang zu ermitteln. Dies kann durch die Rechenmittel 13 dadurch erfolgen, dass beim Vorhandensein entsprechender Signale der genannten Tastorgane die Stellungen der X-Schlitten der beiden Scheiben ermittelt und daraus inbezug auf die zu einem Maschinennullpunkt ausgerichteten Abrichtspitzen die Scheibendurchmesser berechnet werden.

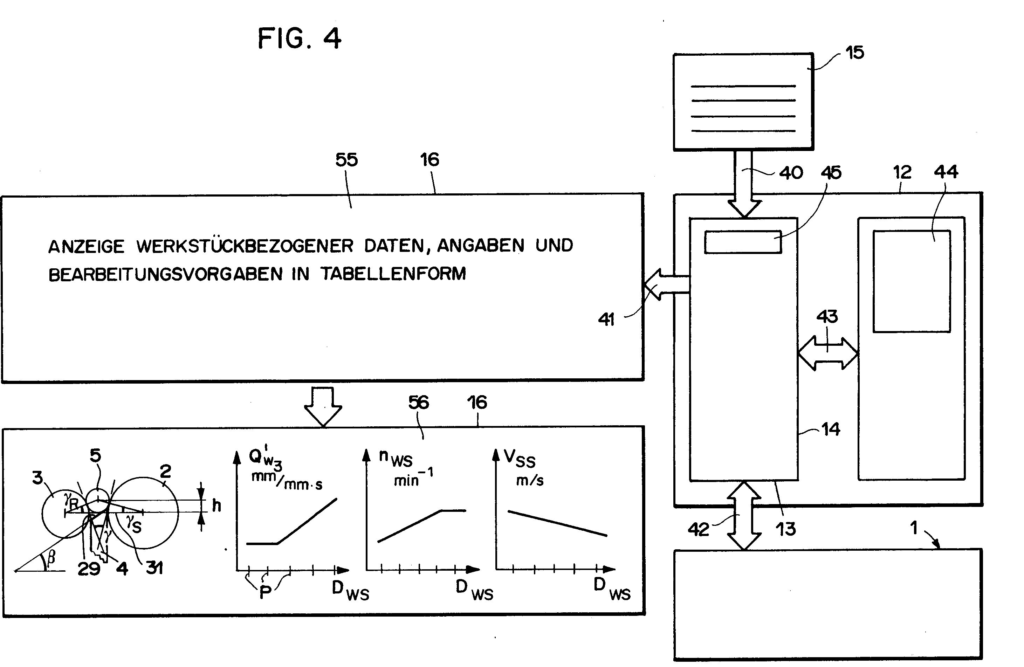

Anhand der Fig. 4, 5 und 6 soll nun ein Schleifvorgang, wie er mit der erfindungsgemässen Steuervorrichtung beispielsweise durchgeführt werden kann, näher beschrieben werden. In den Abbildungen sind die Steuereinheit 12, die spitzenlose Rundschleifmaschine 1 und die Dateneingabeeinrichtung 15 lediglich blockschaltbildmässig dargestellt. Die Arbeitsvorgänge sollen im wesentlichen anhand einer möglichen Benutzeroberfläche, die auf der Anzeigeeinheit 16 darstellbar ist, beschrieben werden.

Als erstes werden den Rechenmitteln 13 mit der Dateneingabeeinrichtung 15 auf das zu bearbeitende Werkstück bezogene Daten, Angaben und Bearbeitungsvorgaben eingegeben. Die auf das Werkstück bezogenen Daten umfassen insbesondere den Werkstückanfangsdurchmesser vor der Bearbeitung, den Werkstückenddurchmesser nach der Bearbeitung so wie mehrere Werkstückzwischendurchmesser, welche letzteren zum Umschalten der Maschine für unterschiedliche Bearbeitungsarten, wie Schrubben, Schlichten, Feinschlichten, Feinstschlichten usw. bestimmt sind. Die Angaben umfassen im wesentlichen die geometrische Lage des Werkstückes im Schleifspalt zwischen der Regelscheibe 3 und der Schleifscheibe 2, insbesondere die Ueberhöhung h' des Werkstückes 5 gegenüber der Zentrumslinie 31 der Regelscheibe 3 als auch der Schleifscheibe 2 sowie beispielsweise einen Schleifwinkel y den die Tangenten an den Berührungslinien der Regelscheibe 3 mit dem Werkstück 5 und der Schleifscheibe 2 mit dem Werkstück 5 einschliessen. Im weiteren kann beispielsweise angegeben werden, dass während dem Bearbeiten des Werkstückes der Auflagepunkt des letzteren auf der Werkstückauflagefläche 29 oder der genannte Schleifwinkel y konstant bleiben sollen.

Die auf den Werkstückdurchmesser bezogenen Bearbeitungsvorgaben oder Technologiedaten sind z.B. das spezifische Zerspanungsvolumen, die Durchmesserabnahme pro Werkstückumdrehung, die Drehzahl des Werkstückes sowie die Schleifscheibengeschwindigkeit.

Zum Eingeben all dieser Daten, Angaben und Bearbeitungsvorgaben ist es vorteilhaft, wenn sich die Be-

5

nutzeroberfläche der Anzeigeeinheit 16, welche vorzugsweise einen graphikfähigen Bildschirm umfasst, in der Form einer Tabelle präsentiert. Solche Tabellen können beispielsweise mit bekannten Tabellenkalkulationsprogrammen definiert und erstellt werden. In der Fig. 4 ist diese Benutzeroberfläche mit dem Bezugszeichen 55 nur symbolisch dargestellt.

Die eingegebenen Daten, Angaben und Bearbeitungsvorgaben können jederzeit auf dem Bildschirm graphisch dargestellt werden. Ein entsprechendes Darstellungsbeispiel ist in der Fig. 4 mit dem Bezugszeichen 56 gekennzeichnet. In einem ersten Teilbild ist beispielsweise die Schleifspaltgeometrie gezeigt. Die Lage des Werkstückes 5 inbezug auf den Werkstückauflagelineal 4, die Schleifscheibe 2 und die Regelscheibe 3 ist ersichtlich. Die Ueberhöhung des Schleifzentrums h gegenüber der Zentrumslinie 31 der Regel- 3 und der Schleifscheibe 2, der Schleifwinkel y, der gleich der Summe der beiden Winkel $\gamma r$ und $\gamma s$ ist, sowie die Neigung $\beta$ der Werkstückauflagefläche 29 sind angegeben. Die Winkel $\gamma r$ und $\gamma s$ stellen je denjenigen Winkel dar, der durch die Zentrumslinie 31 und durch die Verbindungslinie des Zentrums des Werkstückes 5 mit dem Zentrum der Regelscheibe 3 bzw. der Schleifscheibe 2 eingeschlossen ist. In einem zweiten, dritten und vierten Teilbild sind in graphischen Darstellungen je das spezifische Zerspanungsvolumen $Q'w$, die Drehzahl des Werkstückes $n_{WS}$ und die Schleifscheibengeschwindigkeit $V_{SS}$ in Funktion des Werkstückdurchmessers $D_{WS}$ dargestellt. Auf den Abszissen dieser Darstellungen sind zudem die Umschaltpunkte P für verschiedene Bearbeitungsarten, die bezüglich bestimmten Werkstückdurchmessern oder Radien eingegeben worden sind, ersichtlich. Die Rechenmittel 13 kontrollieren dabei, ob die Daten vollständig eingegeben sind, ob Ueberbestimmungen vorhanden sind oder ob irgendwelche Grenzbestimmungen überschritten werden. In einer besonderen Ausführung ist es ebenfalls möglich, dass die Speichermittel 14 einen Bereich 44 umfassen, der als Technologiedatenbank ausgebildet ist. In dieser Datenbank sind beispielsweise für ein zu bearbeitendes Werkstück bevorzugte Angaben bezüglich der geometrischen Lage des Werkstückes im Schleifspalt und/oder bevorzugte Bearbeitungsvorgaben für dieses Werkstück gespeichert. Ein erstes Modul 45 ist in den Rechenmitteln vorgesehen und dazu bestimmt, um zu den eingegebenen werkstückbezogenen Daten aus der Technologiedatenbank entsprechende Angaben und Bearbeitungsvorgaben auszuwählen. Es ist ebenfalls denkbar, die Technologiedatenbank in dem Sinne zu erweitern, dass selbst werkstückbezogene Daten darin enthalten sind. Einzig durch das Eingeben einer Werkstücknummer wäre dann die Steuervorrichtung im wesentlichen in der Lage, das Werkstück entsprechend zu bearbeiten. Einrichtungszeiten könnten so auf ein Minimum reduziert werden.

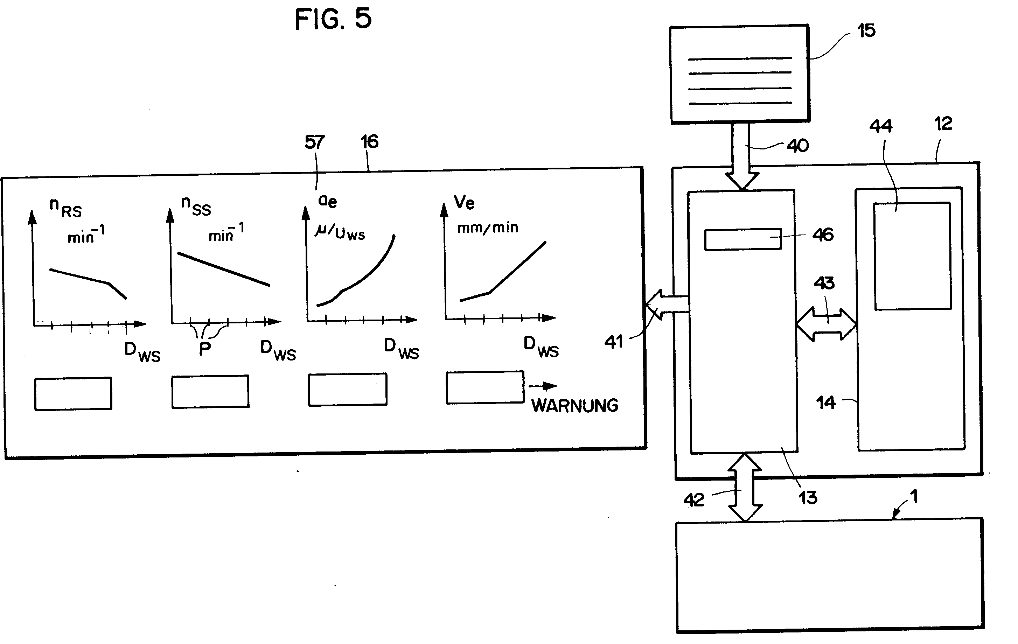

Wie aus der Fig. 5 ersichtlich ist, werden die eingegebenen werkstückbezogenen Daten, die Angaben bezüglich der geometrischen Lage des zu bearbeitenden Werkstückes im Schleifspalt sowie die Bearbeitungsvorgaben durch die Rechenmittel 13 auf Ueberbestimmung überprüft und abhängige Grössen sowie zusätzliche Parameter werden durch die Rechenmittel 13 berechnet. Alle jetzt vorhandenen Daten werden auf das Ueberschreiten von Grenzbestimmungen oder Grenzwerten, die durch die Konzipierung der Rundschleifmaschine und/oder der Steuervorrichtung gegeben sind, kontrolliert. In einer weiteren Bildschirmdarstellung, die mit 57 bezeichnet ist, können aus den Vorgabedaten abgeleitete Daten, wie die Drehzahl $n_{RS}$ der Regelscheibe, die Drehzahl $n_{SS}$ der Schleifscheibe, die Durchmesserabnahme $a_e$ pro Werkstückumdrehung oder die radiale Einstechgeschwindigkeit $V_e$ in Funktion des Werkstückdurchmessers $D_{WS}$ graphisch dargestellt werden. Diese Darstellungen sind von links nach rechts beispielsweise gezeigt. Das Ueberschreiten von Grenzwerten wird in Form von Warnungen ebenfalls angezeigt. Der Bediener wird dabei aufgefordert, entsprechende Daten, Angaben oder Bearbeitungsvorgaben zu ändern und zu korrigieren. Ein zweites Modul 46 ist in den Rechenmitteln 13 vorgesehen, von solchen korrigierten Daten, Angaben oder Bearbeitungsvorgaben abhängige Grössen neu zu berechnen und erneut zu überprüfen, und die geänderte Situation wieder anzuzeigen.

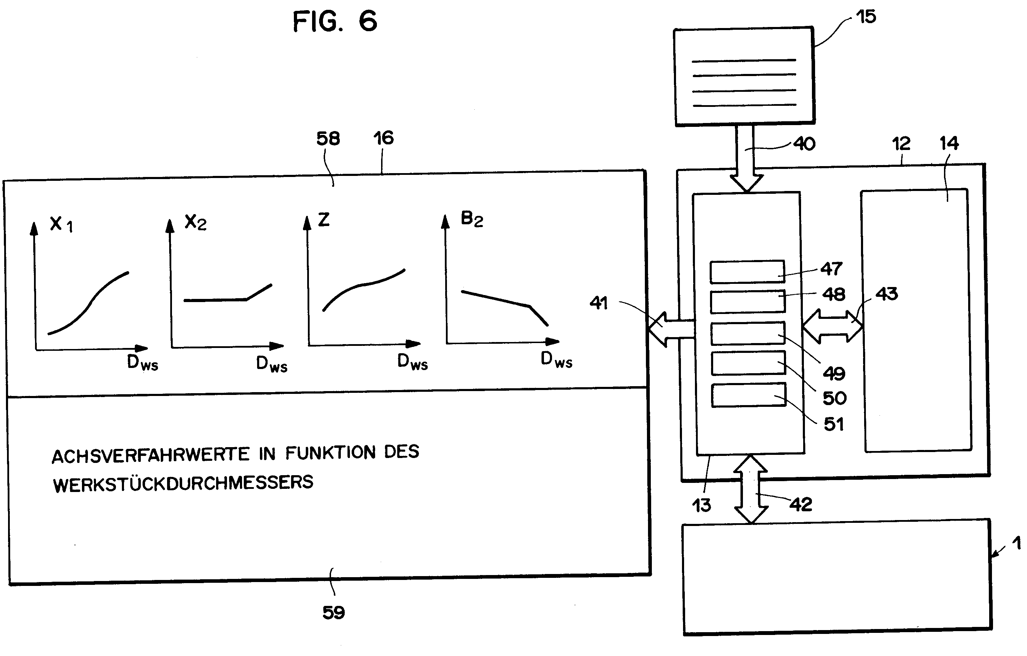

Aus den jetzt in der Steuereinheit 12 vorhandenen Werten werden gemäss der Fig. 6 nun vorerst Steuersignale für die spitzenlose Rundschleifmaschine zum Abrichten der Regelscheibe und/oder der Schleifscheibe berechnet und an die Maschine übertragen. Diese Steuersignale werden durch ein in den Rechenmitteln vorhandenes drittes Modul 47 erzeugt. Sie bewegen die genannten X-Y-Schlitten der Regelscheibe und/oder der Schleifscheibe, so dass die genannten Scheiben ihren zugeordneten Abrichtvorrichtungen zugeführt werden. Ein Berühren der jeweiligen Scheibe mit der ihr zugeordneten Abrichtvorrichtung wird durch je das bereits genannte Tastorgan festgestellt. Ein viertes Modul 48 ist dazu bestimmt, aus den auf das Werkstück bezogenen Daten sowie aus der geometrischen Lage des Werkstückes innerhalb des Schleifspaltes Abrichtsteuersignale so zu berechnen, dass durch entsprechende Bewegungen der X- und Y-Schlitten die Regel- und die Schleifscheibe relativ zu den Abrichtvorrichtungen so bewegt werden, dass die geforderten Mantelflächen an den Scheiben entstehen. Ein fünftes Modul 49 in den Rechenmitteln 13 ist dabei dazu bestimmt, die rechnerische Transformation zum Erzeugen der Regelscheibenmantelfläche durchzuführen, welche Transformation notwendig ist, weil die Regelscheibe nicht auf der Höhe der vorgesehenen Berührungslinie mit dem Werkstück, sondern auf der Zentrumshöhe der Regelscheibe abgerichtet wird. Die Kontur der Regelscheibenmantelfläche ist abhängig von der Grösse der gegenüber der Schleifscheibe vorschubgeneigten Regelscheibe, vom Regelscheibendurchmesser, vom Werkstückdurchmesser sowie von der Schleifzentrumsüberhöhung. Wie bereits früher beschrieben, hat die Regelscheibenmantelfläche keine zylindrische Form, sondern die Form eines Drehkörpers mit einer hyperbolischen Mantellinie, welche jedoch in Abhängigkeit des Werkstückdurchmessers noch korrigiert wird.

Nach dem Beendigen des Abrichtvorganges kann nun mit dem eigentlichen Schleifvorgang begonnen werden. Die Rechenmittel 13 ermitteln aus den eingegebenen Daten, Angaben und Bearbeitungsvorgaben, aus den daraus bereits berechneten abhängigen Grössen oder zusätzlichen Parametern sowie aus den nach dem Abrichten ermittelten Durchmessern der Regelscheibe und der Schleifscheibe die für die verschiedenen gesteuerten Achsen der spitzenlosen Rundschleifmaschine notwendigen Steuersignale. Die Abhängigkeit dieser Steuersignale werden dem Bediener in einer weiteren mit 58 bezeichneten Sicht auf der Anzeigeeinheit angezeigt. Es sind dies die verschiedenen Achsbewegungen oder Achsverfahrwerke der Maschine in Funktion des Werkstückdurchmessers. Diese Darstellungen sind in der Fig. 6 nicht vollständig, sondern umfassen als Beispiel lediglich vier Bilder, je eines für die Bewegungen der Achsen X1, X2 der X-Schlitten für die Schleifscheibe bzw. die Regelscheibe, der Achse Z zum Verstellen der Höhe des Werkstückauflagelineales und der Achse B2 als Drehzahl der Regelscheibe.

Insbesondere, wenn grosse Serien gefertigt werden, kann es vorkommen, dass die Regelscheibe zwischendurch wieder abgerichtet werden muss. Die Rechenmittel enthalten nun ein sechstes Modul 50, das dazu bestimmt ist, insbesondere nach jedem Abrichtvorgang der Regelscheibe und/oder der Schleifscheibe die achsbezogenen Maschinendaten bzw. die der Rundschleifmaschine zugeführten Steuersignale neu zu berechnen und den geänderten Scheibendurchmessern anzupassen.

Während dem Schleifvorgang werden in Inprozessmessungen die momentanen Positionen oder Drehzahlen der gesteuerten Achsen ermittelt und daraus die momentanen Daten des Werkstückes, die momentane Lage des Werkstückes im Schleifspalt und die momentanen Bearbeitungsgrössen ermittelt. Durch Vergleiche mit den in den Rechenmitteln 13 enthaltenen Sollwerten (beispielsweise konstantem Schleifwinkel $\gamma$) lassen sich durch Abgeben von Korrektursignalen die achsbezogenen Maschinendaten bzw. die Steuersignale den sich während der Bearbeitung des Werkstückes sich ändernden Grössen nachführen. Dazu ist ein in den Rechenmitteln 13 vorhandenes siebentes Modul 51 bestimmt. Die Anzeige der momentanen Istwerte und die Resultate des Sollwertvergleiches sind während dem Bearbeitungsvorgang ebenfalls, wie durch das Bezugszeichen lediglich symbolisch angedeutet, auf der Anzeigeeinheit darstellbar.

Es braucht kaum erwähnt zu werden, dass nicht alle die genannten Darstellungen auf dem Bildschirm gleichzeitig vorhanden sein können. Gemäss dem Stand der Technik können diese jedoch nach Bedarf beispielsweise mit der sogenannten Fenstertechnik auf dem Bildschirm umgeschaltet werden.

## Patentansprüche

1. Steuervorrichtung an einer spitzenlosen Rundschleifmaschine (1) mit einer Schleifscheibe (2), einer Regelscheibe (3), einem Werkstückauflagelineal (4) mit einem zu bearbeitenden Werkstück (5), sowie je einer Abrichtvorrichtung (6, 7) für die Schleifscheibe (2) und die Regelscheibe (3), wobei die Steuervorrichtung eine Steuereinheit (12), welche Speichermittel (14) und Rechenmittel (13) umfasst, eine Dateneingabeeinrichtung (15) sowie eine Anzeigeeinheit (16) aufweist und über elektrische Leitungen (42) mit der Maschine (1) verbunden ist, dadurch gekennzeichnet, dass mit der Dateneingabeeinrichtung (15) auf das Werkstück (5) bezogene Daten, Angaben über die geometrische Lage des Werkstückes (5) bezüglich der Schleifscheibe (2), der Regelscheibe (3) und dem Werkstückauflagelineal (4) sowie Bearbeitungsvorgaben eingebbar sind, dass die Steuereinheit (12) dazu bestimmt ist, die eingegebenen Daten, Angaben und Bearbeitungsvorgaben auf Ueberbestimmung und Einhaltung von Grenzbestimmungen zu überprüfen sowie zu den vorhandenen Daten, Angaben und Bearbeitungsvorgaben die zur Bearbeitung des Werkstückes (5) notwendigen achsbezogenen Maschinendaten zu ermitteln, welche letzteren als Steuersignale an die Maschine (1) übertragbar sind, und dass mindestens ein Teil der eingegebenen Daten, Angaben und Bearbeitungsvorgaben sowie der daraus ermittelten, achsbezogenen Maschinendaten an der Anzeigeeinheit (16) darstellbar sind.

2. Steuervorrichtung nach Anspruch 1, dadurch gekennzeichnet, dass die auf das Werkstück (5) bezogenen Daten insbesondere den Werkstückanfangsdurchmesser, den Werkstückenddurchmesser, sowie mehrere Werkstückzwischendurchmesser umfassen, welche letzteren zum Umschalten der Maschine für unterschiedliche Bearbeitungsarten je Umschaltpunkt bestimmt sind, und dass in den Bearbeitungsvorgaben insbesondere das spezifische Zerspanungsvolumen bzw. die Durchmesserabnahme pro Werkstückumdrehung, die Drehgeschwindigkeit des Werkstückes sowie die Schleifscheibengeschwindigkeit enthalten sind.

3. Steuervorrichtung nach Anspruch 1 oder 2, dadurch gekennzeichnet, dass die Speichermittel (14) wenigstens einen Bereich (44) umfassen, in dem eine Technologiedatenbank enthalten ist, dass in der letzteren Angaben und/oder Bearbeitungsvorgaben gespeichert sind und dass die Rechenmittel (13) ein erstes Modul (45) umfassen, das dafür bestimmt ist, zu den erfassten, auf das Werkstück (5) bezogenen Daten daraus geeignete Angaben und Bearbeitungsvorgaben auszuwählen.

4. Steuervorrichtung nach einem der Ansprüche 1 bis 3, dadurch gekennzeichnet, dass in den Rechenmitteln (13) ein zweites Modul (46) vorhanden ist, das dazu bestimmt ist, insbesondere während der Einrichtungsphase der Maschine von geänderten und/oder korrigierten Daten, sowie von Angaben und/oder Bearbeitungsvorgaben abhängige Grössen neu zu berechnen und zu überprüfen, wobei die geänderte Situation bezüglich der Daten, Angaben und/oder Bearbeitungsvorgaben sowie der achsbezogenen Maschinendaten auf der Anzeigeeinheit (16) ersichtlich ist und geänderte Steuersignale an die Maschine (1) übertragbar sind.

5. Steuervorrichtung nach einem der Ansprüche 1 bis 4, dadurch gekennzeichnet, dass in den Rechenmitteln (13) ein drittes Modul (47) vorhanden ist, das dazu bestimmt ist, zusätzliche Steuersignale zu erzeugen, um die Schleifscheibe (2) und/oder die Regelscheibe (3) mit je der zugeordneten, vorgängig bezüglich einem Maschinennullpunkt ausgerichteten Abrichtvorrichtung (6, 7) in Berührung zu bringen, wobei Tastorgane zum Erkennen des Berührens von einer der genannten Scheiben (2, 3) mit der zugeordneten Abrichtvorrichtung (6, 7) vorhanden sind, und um aus den empfangenen Signalen der Tastorgane und aus der Stellung der den entsprechenden Abrichtvorrichtungen (6, 7) zugeführten Scheiben (2, 3) die Scheibendurchmesser zu ermitteln.

6. Steuervorrichtung nach einem der Ansprüche 1 bis 5, dadurch gekennzeichnet, dass die Rechenmittel (13) ein viertes Modul (48) enthalten, welches aus den auf das Werkstück (5) bezogenen Daten sowie aus den Angaben und Bearbeitungsvorgaben errechnete Abrichtsteuersignale an die Maschine (1) abgibt, womit die Regelscheibe (3) und/oder die Schleifscheibe (2) zum Erzeugen einer dem zu bearbeitenden Werkstück (5) entsprechenden Regelscheiben- und/oder Schleifscheibenmantelfläche an die zugeordnete Abrichtvorrichtung (6, 7) zuführbar ist.

7. Steuervorrichtung nach Anspruch 6, dadurch gekennzeichnet, dass die Rechenmittel (13) ein fünftes Modul (49) umfassen, das dazu bestimmt ist, die Abrichtsteuersignale zum Erzeugen der Regelscheibenmantelfläche (30), in Abhängigkeit der gegenüber der Schleifscheibe (2) vorschubgeneigten Regelscheibe (3), des Regelscheibendurchmessers, des Werkstückdurchmessers sowie der beim späteren Bearbeiten des Werkstückes vorgesehenen, von der Zentrumshöhe (31) der Regelscheibe (3) abweichenden Lage der Berührungslinie der letzteren mit dem Werkstück (5), auf die Zentrumshöhe (31) der Regelscheibe (3) umzurechnen.

8. Steuervorrichtung nach einem der Ansprüche 1 bis 7, dadurch gekennzeichnet, dass die Rechenmittel (13) ein sechstes Modul (50) aufweisen, welches dazu bestimmt ist, insbesondere nach jedem Abrichtvorgang der Regelscheibe (3) und/oder der Schleifscheibe (2) die aus den Daten, Angaben und/oder Bearbeitungsvorgaben errechneten achsbezogenen Maschinendaten den geänderten Scheibendurchmessern anzupassen.

9. Steuervorrichtung nach einem der Ansprüche 1 bis 8, dadurch gekennzeichnet, dass die Rechenmittel (13) ein siebtes Modul (51) umfassen, welches zum Abgeben von Korrektursignalen bestimmt ist, mit welchen ausgewählte Daten, Angaben und/oder Bearbeitungsvorgaben infolge von während der Bearbeitung des Werkstückes (5) sich ändernden Grössen einem Sollwert nachführbar sind.

10. Steuervorrichtung nach einem der Ansprüche 1 bis 9, dadurch gekennzeichnet, dass die genannten Module (45, 46, 47, 48, 49, 50, 51) Hardwaremodule und/oder Softwaremodule sind.

11. Steuervorrichtung nach einem der Ansprüche 1 bis 10, dadurch gekennzeichnet, dass auf der Anzeigeeinheit (16) mindestens ein Teil der eingegebenen Daten, Angaben und/oder Bearbeitungsvorgaben, mindestens ein Teil der während der Bearbeitung des Werkstückes momentanen Ist-Werte dieser Daten, Angaben und/oder Bearbeitungsgrössen sowie alle Achspositionen der Maschine ersichtlich sind.

12. Verfahren zum Durchführen eines Schleifvorganges mit einer Steuervorrichtung an einer spitzenlosen Rundschleifmaschine nach einem der Ansprüche 1 bis 11, dadurch gekennzeichnet, dass der Steuereinheit (12) auf das Werkstück (5) bezogene Daten, Angaben für die geometrische Lage des Werkstückes bezüglich der Schleifscheibe (2), der Regelscheibe (3) und dem Werkstückauflagelineal (4), sowie Bearbeitungsvorgaben zugeführt werden, dass in der Steuereinheit (12) von den zugeführten Daten, Angaben und Bearbeitungsvorgaben abhängige Grössen berechnet werden, wobei Daten, Angaben und Bearbeitungsvorgaben sowie die berechneten Grössen auf Ueberbestimmung und auf das Ueberschreiten von vorhandenen Grenzwerten überprüft und allenfalls korrigiert werden, und dass die in der Steuereinheit (12) vorhandenen Daten, Angaben und Bearbeitungsvorgaben sowie die berechneten Grössen in achsbezogene Maschinendaten umgerechnet und als Steuersignale der Maschine (1) zugeführt werden.

13. Verfahren nach Anspruch 12, dadurch gekennzeichnet, dass der Steuereinheit (12) Daten, Angaben und Bearbeitungsvorgaben über die Dateneingabeeinrichtung (15) eingegeben werden.

14. Verfahren nach Anspruch 12, dadurch gekennzeichnet, dass Daten, Angaben und/oder Bearbeitungsvorgaben über die Dateneingabeeinrichtung (15) nur teilweise eingegeben und durch weitere Daten, Angaben und/oder Bearbeitungsvorgaben die in den Speichermitteln (14) gespeichert sind, ergänzt werden.

15. Verfahren nach einem der Ansprüche 12 bis 14, dadurch gekennzeichnet, dass von der Steuereinheit (12) anhand der Daten, Angaben und/oder Bearbeitungsvorgaben sowie der daraus bestimmten abhängigen Grössen vorerst erste achsbezogene Maschinendaten zum Abrichten der Regelscheibe (3) und/oder der Schleifscheibe (2) berechnet und als Steuersignale an die Maschine (1) abgegeben werden, dass die Daten, Angaben und/oder Bearbeitungsvorgaben nach dem Abrichten der genannten Scheiben (3, 2) in der Steuereinheit (12) mit von den Scheibenabmessungen abhängigen Grössen ergänzt werden und dass dann zweite achsbezogene Maschinendaten zum eigentlichen Bearbeiten des Werkstückes (5) berechnet und als Steuersignale an die Maschine übertragen werden.

16. Verfahren nach einem der Ansprüche 12 bis 15, dadurch gekennzeichnet, dass das korrigieren von Daten, Angaben und/oder Bearbeitungsvorgaben von der Steuereinheit (12) selbständig ausgeführt wird oder dass das korrigieren von Daten, Angaben und/oder Bearbeitungsvorgaben über die Dateneingabeeinrichtung (15) durchgeführt wird, nachdem von der Steuereinheit (12) zu korrigierende Grössen auf der Anzeigeeinheit (16) dargestellt worden sind.

17. Verfahren nach einem der Ansprüche 12 bis 16, dadurch gekennzeichnet, dass aus den momentanen achsbezogenen Maschinendaten in der Steuereinheit (12) die momentanen Werkstückdaten, die momentane Lage des Werkstückes (5) bezüglich der Schleifscheibe (2), der Regelscheibe (3) und des Werkstückauflagelineals (4) sowie momentane Bearbeitungsgrössen, wie spezifisches Zerspanungsvolumen bzw. Durchmesserabnahme pro Werkstückumdrehung, Drehzahl des Werkstückes, Schleifscheibengeschwindigkeit etc. bestimmt und auf das Ueberschreiten von Grenzwerten und/oder auf das Einhalten von festgelegten Sollwerten überprüft werden, wobei die an die Maschine (1) zu übertragenden Steuersignale neu berechnet und der momentanen Situation angepasst werden.

FIG. 1

FIG. 2

FIG. 3

EP 0 498 763 A1

# FIG. 4

ANZEIGE WERKSTÜCKBEZOGENER DATEN, ANGABEN UND
BEARBEITUNGSVORGABEN IN TABELLENFORM

# FIG. 5

EP 0 498 763 A1

## FIG. 6

ACHSVERFAHRWERTE IN FUNKTION DES WERKSTÜCKDURCHMESSERS

Europäisches
Patentamt

# EUROPÄISCHER RECHERCHENBERICHT

Nummer der Anmeldung

EP    92 81 0050

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 620 958 (SUNNEN PRODUCTS CO.)<br><br>* Seite 3, Zeile 12 - Seite 7, Zeile 31 *<br>--- | 1,2,<br>11-14,<br>16,17 | B24B49/00<br>G05B19/405<br>G05B19/18 |
| A | US-A-4 031 368 (COLDING ET AL.)<br>* Spalte 13, Zeile 60 - Spalte 14, Zeile 39; Abbildung 20 *<br>--- | 3-10 | |
| A | EP-A-0 111 405 (ENERGY-ADAPTIVE GRINDING INC.)<br>* Ansprüche; Abbildungen *<br>--- | 1-17 | |
| A | EP-A-0 164 686 (TOYODA KOKI K.K.)<br><br>----- | | |
| | | | **RECHERCHIERTE SACHGEBIETE (Int. Cl.5)**<br><br>B24B<br>G05B |

Der vorliegende Recherchenbericht wurde für alle Patentansprüche erstellt

| Recherchenort | Abschlußdatum der Recherche | Prüfer |
|---|---|---|
| DEN HAAG | 25 MAI 1992 | ESCHBACH D.P.M. |